# EUROPÄISCHE PATENTANMELDUNG

(11) **EP 4 344 817 A1**
(43) Veröffentlichungstag der Anmeldung: **03.04.2024**
(21) Anmeldenummer: 23197736.4
(22) Anmeldetag: 15.09.2023
(51) Int. Cl.: B23K 35/02, B23K 1/008, B23K 20/10, B23K 1/06, B23K 35/26, B23K 35/30, B23K 35/38, B23K 1/002, B23K 1/005

(54) **VERFAHREN ZUM FÜGEN VON WERKSTÜCKEN, SOWIE FÜGEPRODUKT**

(30) Priorität: 30.09.2022 DE 102022125415
(71) Anmelder: EUROMAT GMBH, 52499 Baesweiler-Aachen (DE)
(72) Erfinder: Rass, Ino J., 52066 Aachen (DE); Kolberg, Timo, 52477 Alsdorf (DE)
(74) Vertreter: Kalkoff & Partner Patentanwälte mbB

(57) **Zusammenfassung**

Die Erfindung betrifft ein Verfahren zum Fügen eines ersten und eines zweiten Werkstücks unter Einsatz eines Verbindungsmittels. Dabei kann zumindest das erste Werkstück optional vormetallisiert werden. Weiter wird zumindest eines der Werkstücke mit dem Verbindungsmittel präpariert und die Werkstücke in einer Bearbeitungskammer angeordnet. Aus der Bearbeitungskammer wird der elementare Sauerstoff zur Erzeugung einer Bearbeitungsatmosphäre entfernt und die Temperatur des Verbindungsmittels und/oder zumindest des ersten Werkstücks bis zu einer Bearbeitungstemperatur erhöht. Um ein Verfahren zum Fügen von Werkstücken vorzuschlagen, mit welchen auf kostengünstige und effiziente Weise Möglichkeiten zur schonenden Verbindung von Werkstücken geboten werden ist vorgesehen, dass das Verbindungsmittel unter gleichzeitigem Eintrag von Ultraschall über zumindest ein Werkstück aufgeschmolzen und dann abgekühlt und ausgehärtet wird.

## Beschreibung

Die Erfindung betrifft ein Verfahren zum Fügen eines ersten und eines zweiten Werkstücks mittels eines Verbindungsmittels, sowie ein nach diesem Verfahren erzeugtes Fügeprodukt.

Aus der JPH 0 867 978 A ist z.B. ein Verfahren zum Verlöten eines druckresistenten Festkörpers zum Sputtern bekannt. Es ist dabei vorgesehen, dass ein Target mit einem Substrat verlötet wird, wobei diese zur Vorbereitung vormetallisiert werden können, bevor ein zwischen den Verbindungsstellen angeordnetes Lötmittel durch Hitzeeinwirkung aufgeschmolzen wird. Die Vormetallisierung kann unter Einsatz von Ultraschallwellen geschehen. Das Lötmittel wird schließlich weiter unter Druckbeaufschlagung bis zur Verfestigung abgekühlt. Das Lötverfahren kann hier im Vakuum stattfinden.

Es ist zudem aus der WO 2008/079461 A2 ein druckinduziertes Lötverfahren zur Verbindung zweier Bauteile bekannt. Die Bauteile können an entsprechend dafür vorgesehenen Stellen vormetallisiert werden können, wobei dies auch unter Einsatz von Ultraschallwellen erfolgen kann. Zwischen den vorgesehenen Stellen, wird ein Lot und eine reaktive Komponente eingebracht. Mittels Druckbeaufschlagung der Bauteile gegeneinander wird eine exotherme Reaktion der reaktiven Komponente ausgelöst, welche für die Verflüssigung des Lots sorgt.

Ferner ist aus der DE 1 957 979 ein Verfahren zum Metallisieren von keramischen Substraten bekannt. Die Metallisierung erfolgt mittels Aufbringen eines hitzebeständigen Metalloxids und eines lötfähigen Materials auf die keramische Oberfläche. Das lötfähige Material wird erhitzt und aufgeschmolzen, so dass sich unter Einbeziehung der Metalloxide schließlich ein durchgehender Metallüberzug ergibt. Der Metallüberzug soll Ultraschallschweißbar sein.

Fügeverfahren der bereits bekannten Art sind auf Werkstücke ausgerichtet, welche hitze-und vor allem druckbeständig ausgebildet sind. Zur Verbesserung der Fügbarkeit von schwer fügbaren Materialen, müssen neben vorbereitenden Maßnahmen der vorgesehenen Fügestellen regelmäßig Löthilfen, wie Flussmittel, zur Erhöhung des Benetzungsgrads an den Fügestellen eingesetzt werden. Sehr hohe Temperaturen, hohe Drücke und der Einsatz von Löthilfen sind jedoch gerade für empfindliche Werkstücke, wie bspw. Folien, Strukturen, Leiterplatten, Gläser, elektronischen Komponenten, Magnete o.ä. ungeeignet. Insbesondere solche Werkstücke stellen damit besondere Anforderungen an entsprechende Fügeverfahren.

Der Erfindung liegt daher die Aufgabe zugrunde, ein Verfahren zum Fügen von Werkstücken und ein Fügeprodukt vorzuschlagen, mit welchem auf kostengünstige und effiziente Weise eine Möglichkeit zur schonenden Verbindung von Werkstücken geboten wird.

Die Erfindung löst die Aufgabe durch ein Verfahren nach Anspruch 1 und ein Fügeprodukt nach Anspruch 14. Die abhängigen Ansprüche beziehen sich auf vorteilhafte Ausführungsformen.

Das erfindungsgemäße Verfahren bezieht sich auf das Fügen eines ersten und eines zweiten Werkstücks unter Einsatz eines Verbindungsmittels.

Im Rahmen der Erfindung werden unter dem Begriff des Fügens solche Fertigungstechniken verstanden, bei welchen unter Einsatz des Verbindungsmittels eine Mehrzahl von Werkstücken an jeweils einer Fügestelle über das Verbindungsmittel miteinander verbunden werden, wie Löten, Sintern, Kleben usw. Als Verbindungsmittel werden im Rahmen der Erfindung daher entsprechend Mittel wie Sinterpulver/-paste, Hart- bzw. Weichlot, Klebstoff usw. angesehen. Es kommen dabei alle denkbaren Arten und Formen von Werkstücken für die Benutzung im vorstehenden erfindungsgemäßen Verfahren in Frage. Das Verfahren eignet sich aber wie vorgenannt besonders für empfindliche Werkstücke wie Folien, Strukturen, Leiterplatten, Gläser, Prismen, optische und/oder elektronischen Komponenten, Magnete o.ä.

In einem Schritt des erfindungsgemäßen Verfahrens wird zumindest das erste Werkstück optional vormetallisiert. Die Notwendigkeit der Metallisierung des Werkstücks richtet sich nach dessen Beschaffenheit. Das Ziel ist es, einen erhöhten Benetzungsgrad des Werkstücks an einer vorgesehenen Fügestelle zu ermöglichen, so dass sich das Verbindungsmittel mit dem Werkstück bzw. der metallisierten Fügestelle besser vernetzen kann. Weist das Werkstück bereits vorab einen hohen Benetzungsgrad auf, so kann die Vormetallisierung optional entfallen.

In einem weiteren Schritt des erfindungsgemäßen Verfahrens wird zumindest eines der Werkstücke mit dem Verbindungsmittel präpariert. Die Art und Weise der Applikation des Verbindungsmittels kann sich im Rahmen der Erfindung an der Geometrie der Werkstücke bzw. insbesondere an der Geometrie der vorgesehenen Fügestellen orientieren. Denkbare Darreichungsformen für das Verbindungsmittel sind daher Tapes, Folien, Preforms, Pasten, Pulver, als Draht, Ring, Scheibe o.ä. Das Verbindungsmittel kann ferner auch mittels Galvanisierung oder Sputtern auf das zumindest eine Werkstück aufgebracht werden. Es sind auch Kombinationen verschiedener Möglichkeiten denkbar. Unter Präparation kann im Rahmen der Erfindung entsprechend bereits ein Auflegen oder Auftragen des Verbindungsmittels auf zumindest eine Fügestelle angesehen werden.

In einem weiteren Schritt des erfindungsgemäßen Verfahrens werden die Werkstücke in einer Bearbeitungskammer angeordnet. Als Bearbeitungskammer kommt im Rahmen der Erfindung jeder geschlossene Raum in Frage, welcher atmosphärisch isoliert bzw. isolierbar ausgebildet ist. Die Anordnung erfolgt dabei derart, dass sich die Werkstücke zumindest mittelbar kontaktieren. Es ist im Rahmen der Erfindung möglich, dass das erste bzw. das zweite Werkstück bereits im Zuge des optionalen Vormetallisierens, also direkt in einem Verfahrensschritt, mit Verbindungsmittel versehen wurden, wobei die damit entsprechend bereits präparierten Werkstücke direkt, also ggf. auch ohne wiederholte Präparierung, in der Bearbeitungskammer angeordnet werden.

In einem weiteren Schritt des erfindungsgemäßen Verfahrens erfolgt das Entfernen von elementarem Sauerstoff aus der Bearbeitungskammer zur Erzeugung einer Bearbeitungsatmosphäre. Die Werkstücke, insbesondere das zumindest eine präparierte Werkstück, werden damit im Rahmen der Erfindung vor Oxidation und damit der Bildung von Oxidschichten geschützt. Durch das Entfernen von elementarem Sauerstoff, also insbesondere Luftsauerstoff, soll dabei sichergestellt werden, dass die Werkstücke in der Bearbeitungskammer keine dem Fügen hinderliche Oxidschichten mehr ausbilden. Etwaig bereits vorhandene Oxidschichten erneuern sich nach mechanischem, chemischem oder physikalischem entfernen in der Bearbeitungskammer nicht mehr bzw. sehr viel langsamer, was ausreichend Zeit zum Fügen der Werkstücke einräumt.

In einem weiteren Schritt des erfindungsgemäßen Verfahrens wird die Temperatur des Verbindungsmittels und/oder zumindest des ersten Werkstücks bis zu einer Bearbeitungstemperatur erhöht. Im Rahmen der Erfindung wird dem Verbindungsmittel bzw. dem Werkstück Energie in Form von Wärme mittels Wärmeleitung, Wärmestrahlung oder ferner Konvektion zugeführt.

Das Verbindungsmittel wird weiter gemäß dem erfindungsgemäßen Verfahren unter gleichzeitigem Eintrag von Ultraschall über zumindest ein Werkstück aufgeschmolzen.

Im Rahmen der Erfindung kann unter dem Eintrag von Ultraschall auch ein Eintrag mechanischer Vibration und/oder Schwingung mit einer angelegten Frequenz verstanden werden.

In einem weiteren Schritt wird das aufgeschmolzene Verbindungsmittel abgekühlt und ausgehärtet. Im Rahmen der Erfindung sind die Werkstücke nach dem Aushärten über das Verbindungsmittel miteinander verbunden. Die so verbundenen Werkstücke werden als Fügeprodukt bezeichnet. Das Abkühlen und Aushärten kann weiterhin unter Eintrag von Ultraschall bzw. wie vorgenannt analog mechanischer Vibration bzw. Schwingung mit entsprechender Frequenz erfolgen.

Das erfindungsgemäße Verfahren zum Fügen eines ersten und eines zweiten Werkstücks weist einen einfachen und zugleich hoch effizienten und günstigen Ablauf auf. Das Fügen unter Abwesenheit von Sauerstoff erlaubt eine hohe Verbindungsqualität der Werkstücke, insbesondere bzgl. der Vernetzung des Verbindungsmittels an den vorgesehenen Fügestellen der Werkstücke. Dies wird durch den Einsatz von Ultraschall während des Schmelzvorgangs weiter begünstigt, wobei das aufgeschmolzene und wieder ausgehärtete Verbindungsmittel am Fügeprodukt schließlich dank des Ultraschalls eine geringe Porosität und höhere Packdichte aufweist. So können nach Art und Beschaffenheit verschiedenste Werkstücke, insbesondere solche, die wie vorgenannt besonders empfindlich sind, miteinander verbunden werden, ohne Einsatz von Flussmitteln o.ä. und bei besonders schonenden Betriebsparametern (Temperatur, Druck usw.).

Als Verbindungsmittel kommen insbesondere schmelzbare metallische Substanzen bzw. Legierungen in Frage, welche elektrisch leitend sind und besonders von der Abwesenheit elementaren Sauerstoffs profitieren. Die wie vorgenannt etwaige Entfernung von bereits bei der Anordnung des ersten und zweiten Werkstücks in der Bearbeitungskammer auf den Werkstücken vorhandenen Oxidschichten kann im Prozess bspw. auf passive Art und Weise durchgeführt werden, worauf später noch Bezug genommen wird. Es ist aber ebenfalls denkbar, dass die beiden Werkstücke, insbesondere die vorgesehenen Fügestellen, mechanisch vorbereitet und dann zeitnah in der Bearbeitungskammer angeordnet werden. Eine mechanische Vorbereitung kann bezogen auf empfindliche Werkstücke ebenfalls schonend erfolgen. Etwaige Oxide bzw. Oxidreste können andernfalls die Vernetzung des Verbindungsmittels an den vorgesehenen Fügestellen, also an den Oberflächen der Werkstücke behindern. Eingeschlossene Oxidreste, also solche, die nach dem Fügen zwischen Werkstück und Verbindungsmittel oder ferner zwischen Werkstück und optionaler Metallisierung gekapselt sind, verringern einerseits qualitativ die Haltbarkeit bzw. Güte der Fügeverbindung bzw. des Fügeprodukts und können andererseits auch bspw. die elektrische Leitfähigkeit der Fügeverbindung reduzieren. Wurden die vorgesehenen Fügestellen optional vormetallisiert, so ist es denkbar nach der Vormetallisierung auf eine passive bzw. mechanische Oberflächenvorbereitung gänzlich zu verzichten.

Zum Eintrag von Ultraschall auf das Verbindungsmittel während des Aufschmelzens kann in der Bearbeitungskammer bspw. ein Ultraschallgeber angeordnet sein. Ein solcher Ultraschallgeber kann bspw. als Ultraschallschwinger ausgebildet sein, welcher mitunter auch in unmittelbarem, also direktem Kontakt mit dem Verbindungsmittel steht. Es ist aber ebenfalls denkbar, dass der Ultraschall von außerhalb der Bearbeitungskammer durch bspw. eine Wandung der Kammer auf zumindest eines der darin angeordneten Werkstücke übertragen wird. Schließlich ist es auch denkbar, dass ein Ultraschallgeber als Teil der Bearbeitungskammer bspw. in einer entsprechenden Wandung angeordnet ist. Das zumindest eine Werkstück kann dann z.B. in der Nähe oder den Ultraschallgeber kontaktierend in der Bearbeitungskammer angeordnet sein. Wie vorgenannt kann dank des Eintrags von Ultraschall in das Verbindungsmittel insbesondere eine Verdichtung des Verbindungsmittels, und somit ggf. eine Reduzierung der Porosität des schließlich ausgehärteten Verbindungsmittels erreicht werden. Wie vorgenannt, lassen sich die genannten Vorteile gerade durch den Eintrag von Ultraschall während des Aufschmelzens erreichen, so dass bspw. eine Umordnung der Partikel begünstigt wird. Dieser Mechanismus kann bspw. beim Sintern als eine Form des Fügens besonders relevant sein. Der Eintrag von Ultraschall beim bspw. Löten begünstigt aber ebenfalls bspw. die Vernetzung des Verbindungsmittels mit den Oberflächen der Werkstücke an den vorgesehenen Fügestellen. Weiter kann Ultraschall bei Einleitung in ein schmelzflüssiges Verbindungsmittel Kavitationseffekte auslösen, welche überdies zur Entfernung von Verunreinigungen, Oxiden o.ä. an den Werkstücken beitragen kann.

Die Vorteile hinsichtlich der Vernetzung des Verbindungsmittels mit den Oberflächen eines Werkstücks beim Einsatz von Ultraschall können analog auch auf das optionale Vormetallisieren übertragen werden. Das Vormetallisieren verfolgt nämlich insbesondere den Zweck, die Oberfläche eines Werkstücks derart mit einem metallischen Überzug zu versehen, dass das insbesondere aus einem nicht-metallischen und/oder chemisch trägen Werkstoff ausgebildete Werkstück an der vormetallisierten Stelle zu einer stärkeren Vernetzung mit dem Verbindungsmittel neigt. Um daher die Vernetzung desjenigen Werkstoffs welcher zur Metallisierung genutzt wird, mit dem Werkstück zu begünstigen, kann es wie vorgenannt vorteilhaft sein, auch die Metallisierung mit Ultraschall zu unterstützen. Gemäß einer bevorzugten Ausführungsform wird daher beim optionalen Vormetallisieren das zumindest erste Werkstück mit Ultraschall behandelt.

Es kann vorteilhaft sein, wenn die Vormetallisierung in Abwesenheit elementaren Sauerstoffs und/oder in Abwesenheit anderer chemisch reaktiver Gase vorgenommen wird. So kann bspw. vermieden werden, dass sich Reaktionsprodukte (Oxide o.ä.) insbesondere an der Oberfläche des Werkstücks bilden, welche die Vormetallisierung nachteilig beeinflussen können. Die Vormetallisierung kann bspw. chemisch bzw. galvanisch, durch Aufdampfen (PVD, Arc-Verfahren), mittels Auftragslöten oder Auftragssintern, oder auch mittels additiven Spritzverfahren wie bspw. Kaltgasspritzen, Hochgeschwindigkeitsflammspritzen (HVOF) oder Plasmaspritzen erfolgen. Werkstoffe die zur Vormetallisierung in Frage kommen können, sind bspw. Nickel, Zinn, Kupfer, Silber, Gold, oder Platin. Neben einer mechanischen Stabilität und vorteilhafter Eigenschaften bei der Vernetzung des Werkstoffs mit dem Werkstück bzw. weiter mit dem Verbindungsmittel, kann es vorteilhaft sein, wenn zur Vormetallisierung ein Werkstoff eingesetzt wird, welcher gute elektrische Leiteigenschaften aufweist.

Es ist ebenfalls denkbar, dass die Vormetallisierung mechanisch erfolgt, bspw. mittels mechanischer Reibung. So kann bspw. ein Werkstück mit z.B. einer Nickel- oder Kupferdrahtbürste gebürstet und der Abrieb als Werkstoff zur Vormetallisierung genutzt werden.

Eine mechanische Bearbeitung eines Werkstücks derart kann bspw. auch zu dem Zweck erfolgen, etwaig vorgesehene Oberflächen zu reinigen, bspw. von Oxiden oder Oxidhäuten zu befreien. Dabei kann es wiederum vorteilhaft sein, wenn die mechanische Bearbeitung in Abwesenheit elementaren Sauerstoffs vorgenommen wird, um die Rückbildung der vorgenannten Oxide bzw. Oxidhäute zu vermeiden.

Um wiederum den elementaren Sauerstoff aus der Bearbeitungskammer zu entfernen und eine Bearbeitungsatmosphäre zu erzeugen, kann bspw. die Bearbeitungskammer mit einem Gas geflutet werden, welches keinen elementaren Sauerstoff enthält. Die initiale Luft innerhalb der Bearbeitungskammer kann somit verdrängt und schließlich durch das Gas ersetzt werden. Mit Blick auf die Durchmischung von Luft und Gas kann es dabei jedoch sein, dass ein Restanteil an Sauerstoff zurückbleibt. Überdies können empfindliche Werkstücke, welche wie Leiterplatten, Folien, Sensoren o.ä. auch insbesondere druckempfindlich ausgebildet sein können, vorteilhaft sein, wenn auf einen zu hohen Atmosphärendruck der gewünschten Bearbeitungsatmosphäre verzichtet wird. Gemäß einer weiteren bevorzugten Ausführungsform wird daher zum Entfernen des elementaren Sauerstoffs in der Bearbeitungskammer ein Vakuum erzeugt. Die Bearbeitungskammer kann dabei bspw. als Vakuumkammer ausgebildet sein, welcher entsprechende Mittel zur Erzeugung eines Vakuums wie bspw. Vakuum-Pumpen o.ä. zu geordnet sind. Die Abwesenheit elementaren Sauerstoffs hilft wie vorgenannt dabei, die Bildung von Oxiden, insbesondere der Bildung von Oxidhäuten auf den Oberflächen der Werkstücke zu vermeiden. Der atmosphärische Druck innerhalb der Bearbeitungskammer kann nach der Evakuierung je nach Bedarf mit Blick auf die Drucksensibilität der Werkstücke bspw. zwischen 10⁻¹ mbar und 10⁻⁶ mbar betragen.

Hinsichtlich des i.d.R. wie vorgenannt verbleibenden Restdrucks in der Bearbeitungskammer nach der Evakuierung von Luft kann es weiter vorteilhaft sein, den ebenfalls möglicherweise verbliebenen Restsauerstoff aus der Bearbeitungsatmosphäre wie vorgenannt zu verdrängen. Gemäß einer weiteren bevorzugten Ausführungsform wird daher nach dem Erzeugen des Vakuums, die Bearbeitungskammer mit einem Gas gespült, wobei das Gas frei von elementarem Sauerstoff ist. Ein solches Gas ist vorzugsweise chemisch sehr selektiv bzw. inert, wie bspw. elementarer Stickstoff, Argon, Helium o.ä. Zur Vermeidung des Eintrags von oxidativen Reaktionsprodukten kann es nämlich ebenfalls vorteilhaft sein, hierzu ebenfalls auf Gase zu verzichten, welche in gebundener Form Sauerstoff aufweisen. Es ist möglich, dass als Gas zur Spülung ein Gemisch aus entsprechend geeigneten Gasen genutzt wird.

Nachdem die evakuierte Bearbeitungsatmosphäre mit einem Gas der vorgenannten Art gespült wurde, kann die Bearbeitungsatmosphäre insbesondere als im Wesentlichen sauerstofffrei angesehen werden. Zugleich herrscht jedoch ein wesentlich höherer atmosphärischer Druck in der Bearbeitungskammer als zuvor im annähernden Vakuum. Die Vorteile des drucklosen bzw. druckreduzierten Fügens für entsprechend sensible Werkstücke wurde zuvor bereits diskutiert. Gemäß einer weiteren bevorzugten Ausführungsform wird daher, nachdem die Bearbeitungskammer mit dem Gas gespült wurde, ein Vakuum erzeugt. Dieses Vakuum kann dabei z.B. analog zum zuerst erzeugten Vakuum ausgebildet sein. Der wesentliche Unterschied kann hier aber insbesondere darin gesehen werden, dass sich im entsprechenden Restdruck der Bearbeitungsatmosphäre nur noch eine kaum messbare Zahl an Sauerstoffpartikeln befindet. Die Spülung der Bearbeitungsatmosphäre mit dem Gas nach der ersten Evakuierung der Bearbeitungskammer kann also insbesondere verbliebenen Sauerstoff aus der Bearbeitungskammer ausdrängen, so dass nach der zweiten Evakuierung bspw. im Restdruck im Wesentlichen nur noch Partikel desjenigen Gases verbleiben, mit welchem die Bearbeitungskammer im genannten Zwischenschritt gespült wurde.

Es ist möglich, dass eine Spülung der Bearbeitungskammer mittels Gas in jeder Lage vorteilhaft ist, also unabhängig davon, ob bereits ein zumindest annäherndes Vakuum erzeugt wurde. Dem Gas kann dabei neben der Vermeidung von Oxidation gerade eine aktive Rolle in der Vorbereitung der beiden Werkstücke bzw. insbesondere der an den beiden Werkstücken vorgesehenen Fügestellen zukommen. Gemäß einer weiteren bevorzugten Ausführungsform wird die Bearbeitungskammer daher mit einem Schutz- oder Aktivgas geflutet. Das Schutz- oder Aktivgas kann dabei einerseits wieder Luft bzw. etwaig vorhandenen elementaren Sauerstoff aus der Bearbeitungskammer verdrängen. Andererseits kann insbesondere das Aktivgas eine reinigende und/oder aktivierende Wirkung entfalten. Ein solches Aktivgas kann bspw. auf Wasserstoff-Basis, in Form gasförmiger Ameisensäure, welche wiederum mit Wasserstoff, Stickstoff und/oder Argon gemischt sein kann, oder auch als Silan o.ä. vorliegen. Das Aktivgas kann z.B. die beiden Werkstücke oberflächlich von Verunreinigungen und/oder Oxidresten befreien und zugleich eine etwaige Trägheit des Oberflächenmaterials bzgl. der Vernetzung mit dem Verbindungsmittel reduzieren. Als Schutzgase kommen insbesondere bekannte Inertgase wie z.B. Stickstoff in Frage, welche ebenfalls zur vorgenannten Spülung zwischen der ersten und der zweiten Evakuierung der Bearbeitungskammer in Frage kommen. Es ist sowohl bei der Nutzung eines Aktiv- als auch eines Schutzgases möglich, jeweils Gemische geeigneter Gase zu verwenden. Die Einleitung von Aktivgas der vorgenannten Art kann ebenfalls zwischen den beiden genannten Evakuierungen geschehen oder aber auch bspw. vorbereitend vor der ersten Evakuierung.

Neben einer Druckempfindlichkeit kann insbesondere hinsichtlich eines schonenden Fügens von Werkstücken mitunter auch die Höhe der Bearbeitungstemperatur relevant sein. Temperaturempfindliche Werkstücke wie bspw. elektrische Komponenten, Folien, Leiterplatten, Sensoren, Magnete o.ä. können bei bspw. zu hoch angelegter Bearbeitungstemperatur irreversibel beschädigt werden oder zumindest in ihrer ursprünglichen Funktionsweise beeinträchtigt werden. Zugleich ist ein gewisser Temperatureintrag auf die beiden Werkstücke aber unabdingbar, nämlich zum Aufschmelzen des Verbindungsmittels.

Es kann daher vorteilhaft sein, dass die zum Aufschmelzen des Verbindungsmittels notwendige Schmelztemperatur, welche bevorzugt im Wesentlichen gleich der vorgenannten Bearbeitungstemperatur ist, ebenfalls in schonender Art und Weise auf das Verbindungsmittel bzw. zumindest eines der beiden Werkstücke gebracht wird. Gemäß einer weiteren bevorzugten Ausführungsform wird daher die Temperatur des Verbindungsmittels bzw. zumindest eines der beiden Werkstücke mittelbar über die Temperatur der Bearbeitungskammer und/oder der Bearbeitungsatmosphäre bis zur Bearbeitungstemperatur erhöht. Die mittelbare, also indirekte Temperaturerhöhung kann bspw. mittels einer Heizeinrichtung erfolgen, welche die Bearbeitungskammer von außen und/oder innen erwärmt und diese Wärme dann auf Verbindungsmittel und/oder zumindest eines der beiden Werkstücke geleitet wird. Ist die Bearbeitungsatmosphäre als zumindest annäherndes Vakuum ausgebildet, so ist insbesondere zu beachten, dass eine Wärmeübertragung mittels Konvektion wegen der Abwesenheit von Gaspartikeln entfallen kann. Dabei kann dann entsprechend wie vorgenannt die direkte Wärmeleitung ein schonendes Mittel zur entsprechenden Temperaturerhöhung darstellen.

Es kann insbesondere gegenüber einer mittelbaren Temperaturerhöhung vorteilhaft sein, dass die Bearbeitungstemperatur in möglichst kurzer Zeit erreicht wird. Dies kann insbesondere dann ein ausschlaggebender Faktor sein, wenn die Produktionszeiten verkürzt werden sollen. Um auch im bspw. annähernden Vakuum eine schnelle Temperaturerhöhung gewährleisten zu können kann daher gemäß einer weiteren bevorzugten Ausführungsform die Temperatur von zumindest einem der beiden Werkstücke bzw. des Verbindungsmittels unmittelbar mittels Strahlung erhöht werden. Als mögliche Wärmestrahlungsquellen können bspw. IR-Strahlen oder auch Laser zum Einsatz kommen. Eine weitere Möglichkeit zur mittelbaren Temperaturerhöhung kann bspw. auch Induktion sein, wobei Kombinationen verschiedener Methoden zur mittelbaren Temperaturerhöhung denkbar sind. Die Temperaturerhöhung kann z.B. auch mittels an die Werkstückgeometrie angepasster Heizformen realisiert werden. Neben der Möglichkeit einer schnelleren Temperaturerhöhung bietet die Wärmeübertragung mittels Strahlung auch die Möglichkeit einer zielgenauen und damit nur lokalen Temperaturerhöhung. So kann bspw. das Verbindungsmittel mittels eines Lasers lokal nur bis zu den vorgesehenen Fügestellen an den beiden Werkstücken aufgeschmolzen werden. Damit kann weiter der Einfluss von Wärme in Höhe der Betriebstemperatur auf die beiden Werkstücke reduziert werden, weil die Wärmeeinflusszone im Wesentlichen auf den Bereich der vorgesehenen Fügestellen begrenzt werden kann. Somit können Schäden oder Gefügeveränderungen an den beiden Werkstücken auf ein Minimum reduziert werden.

Mittels eines solchen unmittelbaren bzw. optischen Verfahrens kann auch bspw. in effizienter Weise ein Serienfügen realisiert werden. Es ist bspw. denkbar, dass mehrere zu fügende Werkstückpaare oder -gruppen in einer Bearbeitungskammer wie vorgenannt angeordnet werden und dann impulsweise von dem bspw. Laser gefügt werden.

Es kann dabei zur gleichmäßigen Aufschmelzung des Verbindungsmittels vorteilhaft sein, wenn die Erwärmung gezielt über einen vorbestimmbaren Zeitraum erfolgt und das Temperaturniveau und eine ebenfalls vorbestimmbare Zeit auf der gewünschten Bearbeitungstemperatur gehalten wird. Dies hat den besonderen Vorteil, dass auch größere Mengen an Verbindungsmittel im Wesentlichen gleichmäßig aufgeschmolzen werden können, ohne dass sich das Verbindungsmittel bspw. an einer der Wärme exponierteren Stelle nachteilig durch den Wärmeeintrag verändert, während das Verbindungsmittel im Kern noch gar nicht oder nur unvollständig aufgeschmolzen ist. Gemäß einer weiteren bevorzugten Ausführungsform erfolgt die Erhöhung der Temperatur des Verbindungsmittels bzw. zumindest eines der beiden Werkstücke daher nach vorgegebenen Heizprofilen. Ein solches Heizprofil kann bspw. eine stetige bzw. lineare Temperaturerhöhung über einen bestimmten Zeitraum bis auf die Bearbeitungstemperatur vorsehen, bei welcher das Verbindungsmittel wie vorgenannt aufgeschmolzen ist. Die Temperatur des Verbindungsmittels bzw. zumindest des ersten Werkstücks kann dann z.B. plateaumäßig auf dem Niveau der Bearbeitungstemperatur für einen bestimmten Zeitraum gehalten werden. In einem letzten Abschnitt eines solchen bspw. Heizprofils kann die Wärmezufuhr dann bspw. gestoppt werden, sodass sich eine Abkühlung und schließlich eine Erstarrung des Verbindungsmittels einstellt. Es ist denkbar, dass die Abkühlung durch Mittel zur Wärmeabfuhr unterstützt wird. Gleichzeitig ist es aber auch möglich, dass die gewünschte Abkühlung und Erstarrung nur durch bloßes Abschalten der Wärmezufuhr bewirkt wird. Das kann insbesondere der Fall sein, wenn die Mengen an Verbindungsmittel nicht exzessiv groß sind und die Bearbeitungstemperatur nicht zu weit oberhalb der physikalischen Schmelztemperatur des Verbindungsmittels liegt. Werden optische Mittel zur Temperaturerhöhung, also wie vorgenannt bspw. IR oder Laserstrahlen eingesetzt, so kann ein Heizprofil bspw. über eine Steuerung der Strahlungsintensität und/oder der Dauer der Exponierung des Verbindungsmittels bzw. zumindest eines der beiden Werkstücke gegenüber der entsprechenden Strahlung realisiert werden.

Hinsichtlich der Höhe der Bearbeitungstemperatur und deren Einfluss auf zumindest eines der beiden Werkstücke und/oder das Verbindungsmittel ist bspw. beim Löten bereits als Einteilung zu beachten, ob als Verbindungsmittel ein Hart- oder ein Weichlot eingesetzt werden soll. Zwar ist ein Hartlot mechanisch stabiler und entsprechend auch thermisch beständiger, zum Aufschmelzen von Hartloten ist aber insbesondere eine Bearbeitungstemperatur von größer 450°C nötig. Solche Temperaturen können wie vorgenannt für Temperaturen sensible Werkstücke möglicherweise beschädigen und/oder funktional beeinträchtigen. Lote die bei Betriebstemperaturen unterhalb der vorgenannten Grenze aufschmelzen gehören der Kategorie der Weichlote an und wären für entsprechend sensible Werkstücke zu bevorzugen. Gemäß einer weiteren bevorzugten Ausführungsform ist das Verbindungsmittel daher als Weichlot ausgebildet und die beiden Werkstücke werden miteinander verlötet. Als Weichlote kommen insbesondere Legierungen aufweisend größere Mengen an Zinn, Indium, Bismut oder ferner Blei in Frage. Es ist weiter möglich, dass zur Gewährleistung vorteilhafter Eigenschafen Werkstoffe mit höheren Schmelztemperaturen wie bspw. Silber, Kupfer, Nickel o.ä. hinzulegiert werden. Für besonders niedrige Bearbeitungstemperaturen kann der Einsatz von eutektischen Legierungen auf Basis der vorgenannten Elemente vorteilhaft sein, wo mitunter Schmelztemperaturen von unter 100°C möglich sein können.

Es kommen bspw. die nachfolgend nach ihrer Schmelztemperatur (Klammerwert) sortierten eutektischen Lotlegierungen in Frage, wobei die Kürzel der IUPAC-Nomenklatur entsprechen:
In66Bi34 (73°C), Bi57In26Sn17 (79°C), Bi46Sn32Pb20 (100°C), In51Sn49 (120°C), Bi57Sn43 (139°C), In97Ag3 (144°C), In100 (156°C), Sn62Pb38 (183°C), Sn90Au10 (217°C), Sn96,5Ag3,5 (221°C), Sn99,3Cu0,7 (227°C), Sn100 (232°C), Sn65Ag25Sb10 (233°C), Au80Sn20 (278°C), Au88Ge12 (356°C), Au96,85Si3,15 (363°C).

Wie vorgenannt ist die mechanische Stabilität von Weichlötverbindungen geringer als diejenige bei dem Einsatz von Hartloten. Es kann daher besonders vorteilhaft sein, beim Einsatz von Weichloten zu gewährleisten, dass die Vernetzung des Weichlots mit den beiden Werkstücken bzw. den optional vormetallisierten Fügestellen stark ausgebildet ist. Es kann daher entsprechend vorteilhaft sein, beim Einsatz von Weichloten die Oberflächen der beiden Werkstücke wie vorgenannt mittels Einleitung eines Aktivgases in die Bearbeitungskammer in vorbereitender Weise zu aktivieren.

Alternativ zum Löten als Fügeverfahren kann insbesondere, aber nicht abschließend, auch das Sintern zum Einsatz kommen. Der Vorteil liegt darin, dass dieselbe Art von Vernetzung zwischen aufgeschmolzenen Sinterpartikeln als Verbindungsmittel auch bei der Vernetzung des Verbindungsmittels mit den vorgesehenen Fügestellen der beiden Werkstücke erreicht werden kann. Das Sintern ermöglicht gegenüber dem Löten längere Standzeiten und eine hohe mechanische, insbesondere aber auch thermische Belastbarkeit. Auch können Sintertemperaturen unterhalb von Schmelztemperaturen eines Werkstoffs bzw. einer Legierung liegen, so dass möglicherweise auch mit niedrigeren Betriebstemperaturen gearbeitet werden kann. Gemäß einer weiteren bevorzugten Ausführungsform ist das Verbindungsmittel daher als Sinterpulver oder Sinterpaste ausgebildet und die beiden Werkstücke werden miteinander versintert. Als Werkstoff kommen hier insbesondere Silber-, Kupfer- und/oder Nickellegierungen zum Einsatz, welche entweder in Form von Partikeln oder pastös zum Einsatz kommen. Bei Erreichen der Sintertemperatur verbinden sich die einzelnen Partikel untereinander und formen nach dem Abkühlen und Aushärten eine zusammenhängende Verbindung. Sollen wie vorgenannt druckempfindliche Werkstücke miteinander versintert werden, so ist der Einsatz wie ebenfalls vorgenannt von Ultraschall besonders vorteilhaft. Ohne eine Druckbeaufschlagung ergibt sich nämlich ansonsten eine insbesondere poröse Sinterverbindung, welche entsprechend mechanisch weniger belastbar und überdies auch elektrisch weniger leitend ist. Der Ultraschall hilft dabei, die Sintermasse während des Schmelzvorgangs zu verdichten, Porosität entsprechend vorzubeugen und damit bspw. auch die Leitfähigkeit der Fügeverbindung zu verbessern.

Sollen kleine Werkstücke gefügt werden, bspw. elektronische Komponenten auf filigrane Leiterplatten oder Folien aufgebracht werden, so kann es vorteilhaft sein, wenn die Partikelgröße der Sinterpulver bzw. die Korngröße der Sinterpasten ebenfalls besonders klein sind. Gemäß einer weiteren bevorzugten Ausführungsform ist das Sinterpulver bzw. die Sinterpaste daher als Nano- oder Mikrowerkstoff ausgebildet. Eine besonders kleine Darreichungsform kann weiter den Vorteil haben, dass die vorgenannte Porosität aus kleineren Poren ausgebildet und damit mit geringeren Nachteilen versehen ist. Es kann dabei entsprechend auch eine geringere Menge an Ultraschall ausreichen, um die gewünschte Verdichtung des Verbindungsmittels beim Aufschmelzen zu erzeugen. Geeignete Sinterpasten können als Mikrowerkstoff bspw. Partikelgrößen in einem Bereich kleiner als 50 µm aufweisen, als Nanowerkstoff sogar bspw. kleiner als 1 µm. Hier können Sinterpasten Korngrößen in einem Bereich von bevorzugt 1 µm - 50 µm, besonders bevorzugt 2 µm - 40 µm und ganz besonders bevorzugt 3 µm - 30 µm aufweisen.

Es kann entsprechend neben einem geringen Druck beim Fügen auch vorteilhaft sein, wenn die Nutzung von geringen Bearbeitungstemperaturen möglich ist. Die Bearbeitungstemperaturen kann im Falle von Löten als Fügeverfahren bspw. als Schmelztemperatur des Lots und im Fall von Sintern als Fügeverfahren bspw. als Sintertemperatur des Sinterpulvers bzw. der Sinterpaste angesehen werden. Eine geringe Bearbeitungstemperatur kann wie vorgenannt einerseits Werkstücke schützen und andererseits auch Gefüge- bzw. Strukturveränderungen des Verbindungsmittels und/oder der vorgesehenen Fügestellen an Werkstücken bzw. optionaler Metallisierung vorbeugen. Gemäß einer weiteren bevorzugten Ausführungsform wird daher das Verbindungsmittel bei einer Bearbeitungstemperatur in einem Bereich von 50°C - 450°C, bevorzugt 80°C - 400°C, besonders bevorzugt 120°C - 350°C, ganz besonders bevorzugt 150°C - 250°C aufgeschmolzen.

Die Erfindung betrifft zudem ein Fügeprodukt, bestehend aus mittels eines Fügeverfahrens der vorgenannten Art gefügten Werkstücken, wobei zumindest das erste Werkstück eine Druckfestigkeit kleiner 50 MPa, bevorzugt kleiner 10 MPa, besonders bevorzugt kleiner 1 MPa, ganz besonders bevorzugt kleiner 0,01 MPa aufweist.

Das vorstehende Verfahren eignet sich wie vorgenannt besonders für das Fügen von Werkstücken, welche sensibel gegenüber äußeren Einflüssen durch Druck und/oder Temperatur sind. Damit eignet sich das vorstehende Verfahren insbesondere zur Bestückung von Platinen mit elektronischen Komponenten bzw. zum Fügen von Magneten, Metall- und/oder Keramikschäumen, optischen Gläsern, insbesondere beschichtete optische Gläser, Sensoren, LED, Folien und/oder strukturierten Folien aus bspw. Aluminium, Kupfer, Nickel, Gold, Silber o.ä.

Details der Erfindung werden nachstehend an Hand von Ausführungsbeispielen mit Bezug auf Figuren erläutert. Die Figuren zeigen:
Fig. 1 ein schematisches Blockfließbild des erfindungsgemäßen Verfahrens gemäß einer Ausführungsform;
Fig. 2 ein schematisches Blockfließbild des erfindungsgemäßen Verfahrens gemäß einer weiteren Ausführungsform.

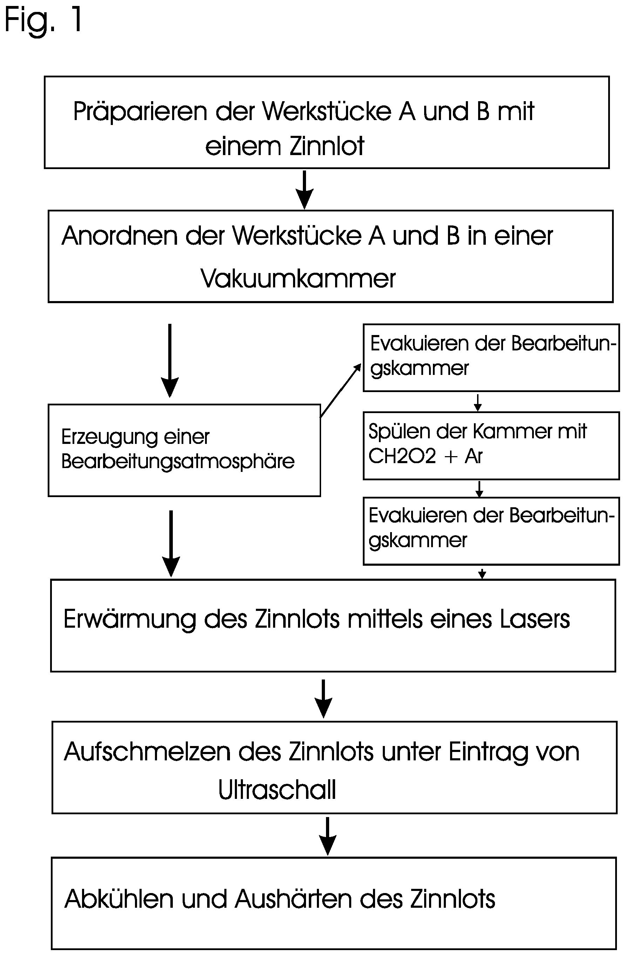

Fig. 1 illustriert schematisch den Ablauf eines erfindungsgemäßen Verfahrens gemäß einer Ausführungsform, bei welcher ein erstes Werkstück A und ein zweites Werkstück B eingangs mit einer eutektischen Lotlegierung auf Zinnbasis präpariert werden. Auf eine Vormetallisierung kann in diesem Beispiel verzichtet werden. Die Werkstücke A und B sind entsprechend derart ausgebildet, dass eine Vernetzung mit dem Zinnlot ohne Vormetallisierung erfolgen kann.

Die Werkstücke wurden jedoch, was in Fig. 1 nicht näher dargestellt ist, zur Vorbereitung mechanisch gereinigt. Die vorgesehenen Fügestellen an den Oberflächen der Werkstücke A und B sind entsprechend durch Bürsten angeraut worden, was ebenfalls die Vernetzung mit dem Zinnlot begünstigt.

In einem zweiten Schritt im vorliegenden Beispiel gemäß Fig. 1 werden die mit dem Zinnlot präparierten Werkstücke A und B in einer Vakuumkammer angeordnet. In der Vakuumkammer wird daraufhin eine geeignete Bearbeitungsatmosphäre in drei Einzelschritten erzeugt. Dabei wird zuerst die Kammer mittels einer Vakuumpumpe auf einen atmosphärischen Restdruck von ca. 10⁻⁵ mbar evakuiert. Dann wird die Kammer zuerst mit gasförmiger Ameisensäure gespült, was die Oberflächen der Werkstücke A und B weiter reinigt und aktiviert. Es wird dann wiederum mit Argon als Edelgas nachgespült. Alternativ könnte hier auch Stickstoff zum Nachspülen genutzt werden. Daraufhin wird in einem dritten Teilschritt die Kammer wieder mit Hilfe einer Vakuumpumpe auf einen atmosphärischen Restdruck von ca. 10⁻⁵ mbar evakuiert.

Die Kammer ist zu diesem Punkt im Verfahren im Wesentlich frei von elementarem Sauerstoff. Die vorgesehenen Fügestellen sind sauber und sowohl mechanisch, als auch chemisch aktiviert worden.

Das Zinnlot wird nun mit Hilfe eines Lasers, welcher hier beispielhaft in der Vakuumkammer angeordnet und von außen angesteuert werden kann, rapide aber linear erwärmt. Das Zinnlot wird dabei bei einer Temperatur von etwa 180°C aufgeschmolzen. Dabei wird zugleich mittels eines hier beispielhaft ebenfalls in der Vakuumkammer angeordneten Ultraschallgebers das Zinnlot über die Werkstücke A und B mit Ultraschall bearbeitet. Es wird damit sichergestellt, dass die Schmelze homogen ausgebildet und keine bspw. Gaseinschlüsse vorhanden sein werden. Außerdem ermöglicht ein direkt in das schmelzflüssige Lot eingebrachte Ultraschall durch Kavitationseffekte den Abtrag eventuell verbliebener Oxidreste oder anderer Verunreinigungen an den Werkstücken A bzw. B.

Ist der Schmelzpunkt des Zinnlots erreicht wird der Laser automatisiert abgeschaltet. Es ist entsprechend möglich, dass die zur Aufschmelzung nötige Expositionszeit des Zinnlots vorberechnet und eingestellt werden kann. Durch eine entsprechende Automatisierung ist hier auch ein Serienfügen möglich.

Nach Abschaltung oder aber bspw. einer Umorientierung des Lasers auf weitere zu fügende Werkstücke beginnt das Zinnlot abzukühlen und entsprechend bei Erreichen der Erstarrungstemperatur auszuhärten.

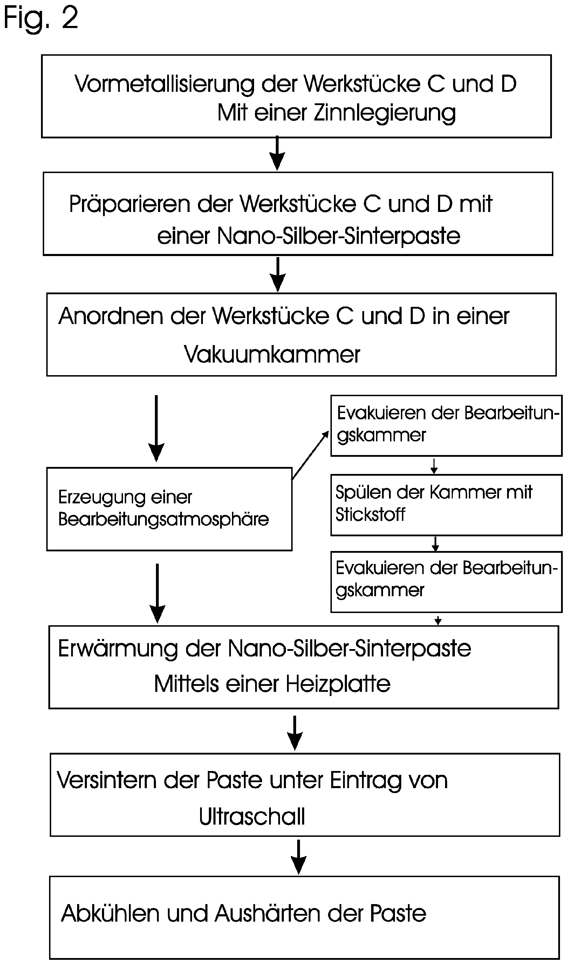

Die Fig. 2 illustriert hingegen beispielhaft eine Ausführungsform des erfindungsgemäßen Verfahrens, bei welchem zwei Werkstücke C und D eingangs mittels einer Zinnlegierung vormetallisiert werden. Die Vormetallisierung erfolgt hier unter Einsatz von Ultraschall mit einem thermischen Spritzverfahren. Der Ultraschall begünstigt die Vernetzung der Zinnlegierung mit den vorgesehenen Fügestellen an den Werkstücken C und D.

Danach werden die vorgesehenen Fügestellen mit einer Nano-Silber-Sinterpaste präpariert und anschließend in einer Vakuumkammer angeordnet. Es wird dann nach dem Vorbild der Vorgehensweise zur Ausführungsform nach Fig. 1 in der Vakuumkammer analog eine Bearbeitungsatmosphäre erzeugt, wobei bei der Gasspülung hier auf den Einsatz eines Aktivgases verzichtet und nur mit Stickstoff gespült wird. Im vorliegenden Beispiel nach Fig. 2 genügt den Anforderungen bzgl. einer guten Vernetzbarkeit der Werkstücke C und D mit der vorgenannten Sinterpaste nämlich bereits beispielhaft die Vormetallisierung mit der Zinnlegierung.

In einem weiteren Schritt wird die Nano-Silber-Sinterpaste mittels Einsatzes einer Heizplatte mittelbar, also indirekt, erwärmt. Die Heizplatte ist hier beispielhaft innerhalb der Vakuumkammer angeordnet. Die Silberpartikel der Paste beginnen hier bei etwa 220°C zu versintern und zu vernetzen. Der Erwärmung ist hier bspw. ein Heizprofil aufgeprägt. Die Heizplatte erwärmt die Paste also hier zuerst linear bis zu einer Temperatur von etwa 220°C, hält dieses Temperaturniveau dann über einen vorgegebenen Zeitraum von hier bspw. 120 Sekunden und wird dann wieder heruntergefahren. Die aufgeschmolzene Paste beginnt dann entsprechend mit dem Abkühlen und härtet aus, sobald die Erstarrungstemperatur der Silber-Paste unterschritten wird. Während des Versinterns begünstigt der Eintrag von Ultraschall die Verdichtung der sich vernetzenden Silberpartikel, so dass die Sinterverbindung verdichtet und damit von etwaigen Einschlüssen bzw. Poren befreit wird. Eine derart verdichtete und porenfreie Sinterverbindung hat weiter besonders gute Eigenschaften in Bezug auf die Leitfähigkeit der Verbindung.

Es ist unter Einsatz des erfindungsgemäßen Verfahrens möglich, qualitativ hochwertige Verbindungen zu schaffen zwischen LED, Platinen oder anderen Elektronikkomponenten und Kühlkörpern, insbesondere aus Stahl, Aluminium oder Keramik. Ebenso können hochwertige Fügeverbindungen zwischen Magneten und metallischen bzw. keramischen Halterungen, zwischen optischen Gläsern, insbesondere beschichteten optischen Gläsern und metallischen bzw. keramischen Fassungen oder auch zwischen strukturierten Folien und metallischen bzw. keramischen Kühlkörpern erzeugt werden. Überdies kommt das Verfahren in Frage zum Fügen von Folienstrukturen oder porösen metallischen oder keramischen Strukturen für Heiz-Kühlkörper. Ein solcher Fall kann bspw. das Fügen von Peltierelementen auf metallische oder keramische Bauteile sein.

## Patentansprüche

1. Verfahren zum Fügen eines ersten und eines zweiten Werkstücks unter Einsatz eines Verbindungsmittels, mit den Schritten
- Optional: Vormetallisieren zumindest des ersten Werkstücks,
- Präparieren zumindest eines der Werkstücke mit dem Verbindungsmittel,
- Anordnen der Werkstücke in einer Bearbeitungskammer,
- Entfernen von elementarem Sauerstoff aus der Bearbeitungskammer zur Erzeugung einer Bearbeitungsatmosphäre,
- Erhöhung der Temperatur des Verbindungsmittels und/oder zumindest des ersten Werkstücks bis zu einer Bearbeitungstemperatur,
- Aufschmelzen des Verbindungsmittels unter gleichzeitigem Eintrag von Ultraschall über zumindest eines der Werkstücke,
- Abkühlen und Aushärten des aufgeschmolzenen Verbindungsmittels.

2. Verfahren nach Anspruch 1, **dadurch gekennzeichnet, dass** beim optionalen Vormetallisieren, das zumindest erste Werkstück mit Ultraschall behandelt wird.

3. Verfahren nach einem der vorangehenden Ansprüche, **dadurch gekennzeichnet, dass** zum Entfernen von elementarem Sauerstoff in der Bearbeitungskammer ein Vakuum erzeugt wird.

4. Verfahren nach Anspruch 3, **dadurch gekennzeichnet, dass** nach dem Erzeugen des Vakuums die Bearbeitungskammer mit einem Gas gespült wird, wobei das Gas frei von elementarem Sauerstoff ist.

5. Verfahren nach Anspruch 4, **dadurch gekennzeichnet, dass** nachdem die Bearbeitungskammer mit dem Gas gespült wurde, ein Vakuum erzeugt wird.

6. Verfahren nach einem der vorangehenden Ansprüche, **dadurch gekennzeichnet, dass** die Bearbeitungskammer mit einem Schutz- oder einem Aktivgas geflutet wird.

7. Verfahren nach einem der vorangehenden Ansprüche, **dadurch gekennzeichnet, dass** die Temperatur des Verbindungsmittels bzw. zumindest eines der beiden Werkstücke mittelbar über die Temperatur der Bearbeitungskammer und/oder der Bearbeitungsatmosphäre bis zur Bearbeitungstemperatur erhöht wird.

8. Verfahren nach einem der vorangehenden Ansprüche, **dadurch gekennzeichnet, dass** die Temperatur des Verbindungsmittels bzw. zumindest eines der beiden Werkstücke mittels Strahlung unmittelbar bis zur Bearbeitungstemperatur erhöht wird.

9. Verfahren nach einem der vorangehenden Ansprüche, **dadurch gekennzeichnet, dass** die Erhöhung der Temperatur des Verbindungsmittels bzw. zumindest eines der beiden Werkstücke nach vorgegebenen Heizprofilen erfolgt.

10. Verfahren nach einem der vorangehenden Ansprüche, **dadurch gekennzeichnet, dass** das Verbindungsmittel als Weichlot ausgebildet ist und die beiden Werkstücke miteinander verlötet werden.

11. Verfahren nach einem der Ansprüche 1-9, **dadurch gekennzeichnet, dass** der Verbindungsmittel als Sinterpulver oder Sinterpaste ausgebildet ist und die beiden Werkstücke miteinander versintert werden.

12. Verfahren nach Anspruch 11, **dadurch gekennzeichnet, dass** das Sinterpulver bzw. die Sinterpaste als Nano- oder Mikrowerkstoff ausgebildet ist.

13. Verfahren nach einem der vorangehenden Ansprüche, **dadurch gekennzeichnet, dass** das Verbindungsmittel bei einer Bearbeitungstemperatur in einem Bereich von 50°C - 450°C, bevorzugt 80°C - 400°C, besonders bevorzugt 120°C - 350°C, ganz besonders bevorzugt 150°C - 250°C aufgeschmolzen wird.

14. Fügeprodukt, bestehend aus Werkstücken, gefügt mittels eines Verfahrens nach einem der Ansprüche 1-13, wobei zumindest das erste Werkstück eine Druckfestigkeit aufweist im Bereich von 50 MPa bis 0,001 MPa.
